Europäisches Patentamt

European Patent Office

Office européen des brevets

⑨

(11) Veröffentlichungsnummer: **0 287 689**
A1

# EUROPÄISCHE PATENTANMELDUNG

(21) Anmeldenummer: 87105800.4

(22) Anmeldetag: 19.04.87

(51) Int. Cl.⁴ **G11B 23/04 , G11B 5/41**

(43) Veröffentlichungstag der Anmeldung:
26.10.88 Patentblatt 88/43

(84) Benannte Vertragsstaaten:
AT BE CH DE ES FR GB GR IT LI LU NL SE

(71) Anmelder: Müller, Hans
Silvrettastrasse 14
D-7000 Stuttgart 60(DE)

(72) Erfinder: Müller, Hans
Silvrettastrasse 14
D-7000 Stuttgart 60(DE)

(74) Vertreter: Schuster, Gregor, Dipl.-Ing.
Patentanwälte Schuster & Thul
Wiederholdstrasse 10
D-7000 Stuttgart 1(DE)

(54) Reinigungskassette.

㉗ Reinigungskassette für den Schreib-und Lese-kopf (4) von Magnetbandaufzeichnungsgeräten mit einem, dem Schreib-und Lesekopf (4) zugewandten, vorzugsweise hin-und herbetätigten Reiniger (3), wobei zum Antrieb des Kassettenlaufwerks ein An-triebsrad (8) im Magnetbandaufzeichnungsgerät ge-lagert ist und wobei ein Putzteil (I4) für dieses An-triebsrad (9) vorhanden ist. das über eine Vorrich-tung (II. I2. I3 und I5) zur Laufbahn des Antriebsrads (9) hin bewegbar ist.

FIG. 1

## Reinigungskassette

Stand der Technik

Die Erfindung geht aus von einer Reinigungskassette nach der Gattung des Hauptanspruchs.

Der Schreib-und Lesekopf eines Magnetbandaufzeichnungsgeräts ist gegen Verschmutzung besonders empfindlich, da Schmutzteilchen in Form von Band-oder Metallabrieb zu Schreibfehlern und Lesefehlern führen können, was im Extremfall zu Speicherfehlern oder gar Ausfall von Daten führen kann. Bei einer bekannten Reinigungskassette der Eingangs genannten Art (EP - OS 0188655) wird der Schreib-und Lesekopf über ein walkbares Putzteil gereinigt, das über einen Schieber am Kopf vorbeigeführt wird und dabei den Schmutz aufnimmt.

Außer dem Schreib-und Lesekopf weisen die hier betrachteten Magnetbandaufzeichnungsgeräte ein zur Kassette hin gewandtes Antriebsrad auf, durch welches das in der Kassette angeordnete Laufwerk angetrieben wird. Dieses Antriebsrad unterliegt so wie der Schreib-und Lesekopf Verschmutzungen, die jedoch durch den hin-und hergeschobenen Reiniger schon allein deshalb nicht ganz entfernt werden können, weil hierzu der Reiniger an dem Antriebsrad anliegen müsste, was der Hin-und Herarbeitsfunktion des Reinigers widerspricht. Hinzu kommt, daß das Material des Reinigers für den Schreib-und Lesekopf aus einem saugfähigen schwammartigen Material bestehen sollte, welches an dem Schreib-und Lesekopf entlang geschoben wird und aufgrund einer Art Adhäsionswirkung reinigt. Beim rotierenden Antriebsrad hingegen wird durch diese Wirkung eine ungewünschte Abbremsung erzeugt, abgesehen davon, daß sich an dem Reiniger eine einseitige Schmutzanhäufung ausbildet. Ein weiterer Nachteil der bekannten Reinigungskassetten besteht darin, daß der Reiniger trotz seiner elastischen Ausbildung das Antriebsrad kaum erfaßt, da beim Einsetzen der Reinigungskassette und Einschalten des Schreib und Lesekopfes in Funktionsstellung das Antriebsrad im Unterschied zu Schreib-und Lesekopf nur geringfügig in Richtung Reinigungskassette verschoben wird. Ein Reiniger mit größerem Putzteil würde aber beim Einsetzen der Reinigungskassette in das Magnetbandaufzeichnungsgerät hindernd im Wege stehen bzw. durch Berühren des Gehäuses des Magnetbandaufzeichnungsgerätes verschmutzen.

Vorteile der Erfindung

Die erfindungsgemäße Reinigungskassette mit den kennzeichnenden Merkmalen des Hauptanspruchs hat demgegenüber den Vorteil, daß das Putzteil unabhängig vom Reiniger des Schreib-und Lesekopfes arbeitet, so daß vor allem auch ein anderes Material beim Putzteil als beim Reiniger verwendet werden kann. Auch kann dieses Putzteil ausgetauscht werden, wenn eine entsprechende Verschmutzung gegeben ist, ohne daß deshalb auch der Reiniger ausgetauscht werden muß. Nicht zuletzt kann die Breite des Putzteils der Breite des Antriebsrades angepasst werden, die meist geringer ist als die Breite des Schreib-und Lesekopfes.

Nach einer vorteilhaften Ausgestaltung der Erfindung ist das Putzteil für das Antriebsrad erst nach Einsetzen der Reinigungskassette in das Magnetbandaufzeichnungsgerät in die Putzstellung bewegbar, so daß das Einsetzen der Reinigungskassette durch den Putzteil nicht behindert wird bzw. das Putzteil nicht in Berührung mit dem Gehäuse, d.h. dem Einführungsschacht der Kassette, des Aufzeichnungsgerätes gerät.

Nach einer weiteren vorteilhaften Ausgestaltung der Erfindung wird das Putzteil durch die Betätigung des Reinigers des Schreib-und Lesekopfes in die Putzstellung gebracht. Durch diese funktionelle Koppelung kann der wie auch immer betätigte Reiniger infolge der Koppelung mit dem Putzteil dieses in die Putzstellung verschieben, nachdem beim Einsetzen der Reinigungskassette in das Magnetbandaufzeichnungsgerät das Putzteil "eingezogen" war. Diese Koppelung kann in unterschiedlicher Weise gestaltet sein und hängt von der Bewegungsrichtung des Reinigers ab. Bei der oben beschriebenen bekannten Reinigungskassette erfolgt die Betätigung beim Hin-und Herschieben des Reinigers, wobei das Putzteil nur mit dem Antriebsrad zu dessen Reinigung in Berührung kommt, wenn beim Hin-und Herschieben des Reinigers dieser die enstprechende Stellung einnimmt, was so lange sein kann, daß der ganze Umfang des Antriebsrades gereinigt wird. Natürlich kann erfindungsgemäß das Putzteil auch durch andere Mittel in die Arbeitsstellung bewegbar oder in dieser gehalten werden.

Nach einer weiteren vorteil haften Ausgestaltung der Erfindung ist das Putzteil an einem in der Reinigungskassette gelagerten Schwenkhebel angeordnet, der nach Ausschwenken das Putzteil an die Lauffläche des Antriebsrades führt und nach Einschwenken das Putzteil so weit in die Kassette einzieht, daß es beim Einsetzen der Reinigungskassette in das Magnetbandaufzeichnungsgerät oder beim Herausnehmen der Reinigungskassette aus diesem weder behindert noch beschmutzt.

Nach einer weiteren vorteilhaften Ausgestaltung der Erfindung ist der Schwenkhebel durch eine Feder belastet, durch die das Putzteil eingeschwenkt wird. Der Hebel kann vorteilhafterweise aus Kunststoff ausgebildet sein, wobei als Feder ein Kragarm dieses Hebels dienen kann, der sich am Gehäuse der Reinigungskassette abstützt. Bei der Ausbildung des Reinigers als in Richtung der Kassettenlängsausdehnung hin-und herbewegbarer Schieber, kann dieser Schieber nach Zurücklegung eines entsprechenden Weges auf den Hebel stoßen und diesen entgegen der Kraft der Feder in Putzstellung verschwenken. Der Antrieb für diese hin-und hergehende Bewegung kann auf verschiedene Weise erfolgen, beispielsweise mechanisch von außen, durch einen Federantrieb innerhalb der Reinigungskassette oder über das Antriebsrad mit einem entsprechend ausgebildeten Antriebswerk in der Reinigungskassette. Erfindungsgemäß kann diese Verschwenkung des Schwenkhebels auch mit anderen Mitteln durchgeführt werden, die unabhängig vom Reiniger arbeiten.

Nach einer weiteren vorteilhaften Ausgestaltung der Erfindung, bei der der Reiniger durch das Magnetaufzeichnungsgerät selbst antreibbar ist, indem das Antriebsrad unmittelbar ein in der Reinigungskassette gelagertes Treibrad antreibt, reinigt das Putzteil mit einer Teilfläche die Laufbahn des Antriebsrades und mit einer anderen Teilfäche gleichzeitig die des Treibrades. Hierbei kann das Putzteil aus zwei Stücken bestehen, von denen das eine das Treibrad das andere, das Antriebsrad gleichzeitig oder aber nacheinander reinigt. Die Teile können hierfür an den freien Enden eines federnden Bandes oder dergleichen angeordnet sein.

Da das Putzteil vor der Reinigung angefeuchtet wird, wird der Schmutz auf dem Treibrad bzw. Antriebsrad angelöst und bevor die beiden Räder wieder in Berührung kommen vom Putzteil aufgenommen. Es wird dadurch vorteilhafterweise erreicht, daß der Schmutz, bevor er von der Lauffläche des einen Rades auf das andere übertragen wird, vom Putzteil weggewischt wird.

Nach einer weiteren vorteilhaften Ausgestaltung der Erfindung weist das Putzteil die Form einer Tülle auf, die auf einem parallel zur Achse des Antriebsrades angeordneten Zapfen aufsteckbar ist. Hierdurch ist es möglich, dieses Putzteil jeweils bei Verschmutzung durch seitliches Abziehen und Wiederaufstecken eines neuen Putzteils auszutauschen. Im Unterschied zu dem Material des Reinigers kann als Material für das Putzteil ein Reinigungsfilz oder ein Reinigungsflies dienen.

Zeichnung

Ein Ausführungsbeispiel des Gegenstandes der Erfindung ist in der Zeichnung dargestellt und im folgenden näher beschrieben. Es zeigen:

Fig. I einen Röntgenblick durch die Breitseite einer Reinigungskassette und

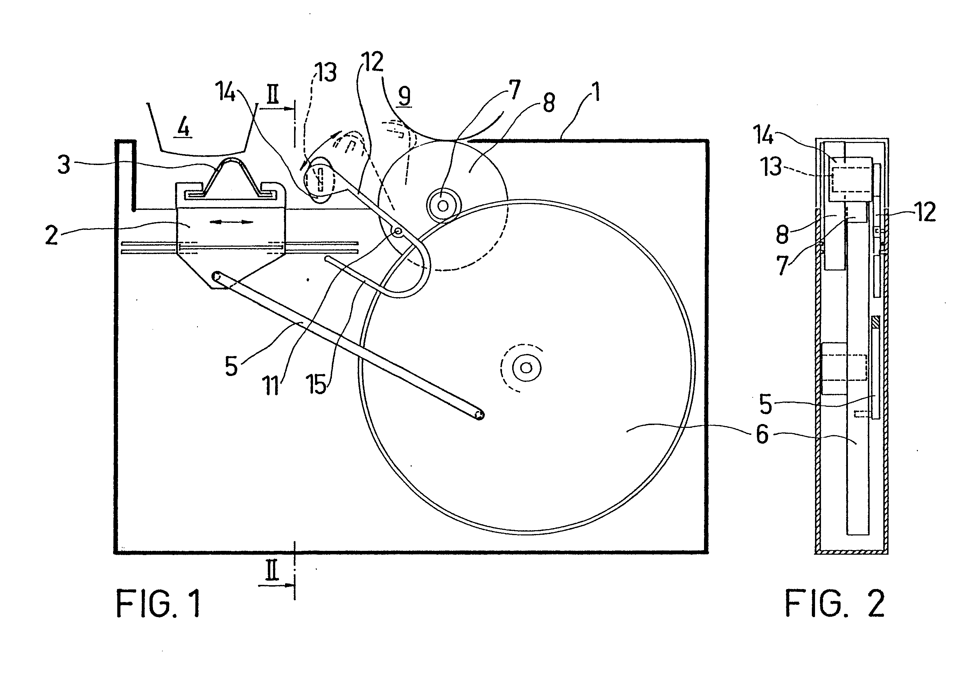

Fig. 2 einen Schnitt nach Linie II -II in Fig.I.

Beschreibung des Ausführungsbeispiels

Im Gehäuse I einer Reinigungskassette ist ein Schieber 2 mit einem Reiniger 3 hin-und her verschiebbar, um dadurch den hier nur angedeuteten Schreib-und Lesekopf 4 eines Magnetaufzeichungsgerätes zu reinigen.

Der Schieber 2 wird durch eine Kurbel 5 eines im Gehäuse gelagerten Zahnrades 6 angetrieben. In das Zahnrad 6 greift ein Ritzel 7 eines Treibrades 8, das ebenfalls im Gehäuse I gelagert ist.

Das Treibrad 8 wirkt mit seiner Laufbahn mit jener eines Antriebsrades 9 zusammen, welches im Magnetbandaufzeichnungsgerät gelagert und getrieben ist und welches normalerweise beim Einsatz einer Aufzeichnungskassette deren Kassettenlaufwerk antreibt. Hierfür weist dann das Kassettenlaufwerk ein dem Treibrad 8 entsprechendes Rad auf.

Im Gehäuse I ist außerdem eine Achse II vorhanden, auf der ein Schwenkhebel I2 gelagert ist, der an seinem freien Ende einen Zapfen I3 aufweist, auf welchem ein tüllenförmiges Putzteil I4 aufgesteckt ist. Außerdem ist an diesem Schwenkhebel I2 eine Feder I5 angeordnet, durch die der Hebel I2 die in Figur I dargestellte Lage einnimmt.

Wenn der Schieber 2 nach Einsetzen der Reinigungskassette in das Magnetaufzeichnungsgerät über das Antriebsrad 9 und das Treibrad 8 sowie das Ritzel 7 und das Zahnrad 6 über die Kurbel 5 nach rechts verschoben wird, stößt dieser Schieber 2 nach Zurücklegen des freien Weges auf den Schwenkhebel I2 und schwenkt diesen in die gestrichelt dargestellte Lage. In dieser Lage streift die Lauffläche des Antriebsrades 9 auf der einen Seite über das Putzteil und die Lauffläche des Treibrades 8 über eine andere Seite des Putzteils I4. Aufgrund der Übersetzung zwischen Ritzel 7 und Zahnrad 6 bleibt der Schieber 2 verhältnismäßig lang in dieser Stellung, so daß der gesamte Umfang beider Räder 8 und 9 geputzt wird.

Sobald dann der Schieber 2 wieder zurück in die dargestellte Lage fährt, wird durch die Feder I5 angetrieben der Schwenkhebel I2 mit dem Putzteil I4 in die gezeigte Lage zurückgeschwenkt.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

I. Reinigungskassette für den Schreib-und Lesekopf von Magnetbandaufzeichnungsgeräten mit zur Fixierung der Reinigungskassette im Magnetaufzeichnungsgerät erforderlichen Führungsabschnitten und mit einer auf der den Schreib-und Lesekopf zugewandten Seite vorgesehenen Reinigungsvorrichtung, die einen bei eingesetzter Reinigungskassette auf dem Schreib-und Lesekopf vorzugsweise hin-und her beweglichen Reiniger aufweist, dadurch gekennzeichnet, daß die Reinigungsvorrichtung außerdem der Reinigung des Schreib-und Lesekopfes (4) dienenden Reiniger (3) ein eine andere Putzbewegung durchführendes Putzteil (I4) aufweist, welches zur Reinigung eines in Richtung der Kassettenlängsausdehnung neben dem Schreib-und Lesekopf (4) im Aufzeichnunggerät angeordneten Antriebsrades des Kassettenlaufwerks dient.

2. Reinigungskassette nach Anspruch I, dadurch gekennzeichnet, daß das Putzteil (I4) erst bei eingesetzter Reinigungskassette durch eine Stellvorrichtung (I2) in eine Putzstellung an das Antriebsrad (9) bewegbar ist.

3. Reinigungskassette nach Anspruch 2 dadurch gekennzeichnet, daß als Stellvorrichtung für das Putzteil (I4) die Reinigungsvorrichtung (2,3) des Schreib-und Lesekopfes dient.

4. Reinigungskassette nach Anspruch I, 2 oder 3 dadurch gekennzeichnet, daß das Putzteil (I4) an einem in der Reinigungskassette gelagerten Schwenkhebel (I2) angeordnet ist, der nach Ausschwenken das Putzteil (I4) an die Lauffläche des Antriebsrades (9) führt.

5. Reinigungskassette nach Anspruch 4 dadurch gekennzeichnet, daß der Schwenkhebel durch eine Feder (I5) belastet ist, die der Ausschwenkrichtung entgegenwirkt.

6. Reinigungskassette nach Anspruch 5 dadurch gekennzeichnet, daß Schwenkhebel (I2) und Feder (I5) einstückig und aus Kunststoff sind, wobei sich die Feder (I5) am Gehäuse der Reinigungskassette abstützt.

7. Reinigungskassette nach einem der vorhergehenden Ansprüche dadurch gekennzeichnet, daß der Antrieb des Reinigers (3) über ein in der Reinigungskassette gelagertes Treibrad (8) erfolgt, welches durch das im Magnetbandaufzeichnungsgerät gelagerte Antriebsrad (9) angetrieben wird, und daß das Putzteil (I4) mit einer Teilfläche die Laufbahn des Antriebsrades (9) und mit einer anderen Teilfläche die Laufbahn des Treibrades (8) reinigt.

8. Reinigungskassette nach Anpruch 7 dadurch gekennzeichnet, daß das Putzteil aus zwei Teilen besteht, von denen eines dem Treibrad, das andere dem Antriebsrad zugeordnet ist.

9. Reinigungskassette nach einem der vorhergehenden Ansprüche dadurch gekennzeichnet, daß das Putzteil (I4) aus einem Reinigungsfilz (Reinigungsflies) besteht.

I0. Reinigungskassette nach einem, der vorhergehenden Ansprüche dadurch gekennzeichnet, daß das Putzteil (I4) die Form einer Tülle hat, die auf einen parallel zur Achse des Antriebsrades (9) angeordneten Zapfen (I3) aufsteckbar ist.

FIG. 1

FIG. 2

0 287 689

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 193 367 (J.F. FRITSCH) * Seite 12, Zeile 22 - Seite 14, Zeile 9; Figuren * | 1-6 | G 11 B 23/04 G 11 B 5/41 |
| A | | 7-10 | |
| | --- | | |
| X | EP-A-0 114 115 (STANTON) * Seite 5, Zeilen 15-25; Seite 6, Zeilen 28-32; Seite 7, Zeilen 31-36; Figuren * | 1-3,9 | |
| A | | 5-8,10 | |
| | --- | | |
| X | US-A-4 442 468 (D'ALAYER DE COSTEMORE D'ARC) * Figur 2; Spalte 2, Zeile 64 - Spalte 3, Zeile 30 * | 1-3,9 | |
| A | | 5-7 | RECHERCHIERTE SACHGEBIETE (Int. Cl.4) G 11 B |
| | --- | | |
| A | GB-A-2 072 920 (CAMBRASOUND LTD) * Figuren; Seite 1, Zeile 68 - Seite 2, Zeile 11 * | 1,4-6, 9,10 | |
| | --- | | |
| A | FR-A-2 519 457 (ALLSOP INC.) * Figuren; Seite 4, Zeile 18 - Seite 7, Zeile 28 * | 1,4-6, 9,10 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 02-11-1987 | SPIGARELLI A. |

Europäisches
Patentamt

**EUROPÄISCHER RECHERCHENBERICHT**

Nummer der Anmeldung

EP 87 10 5800

| | EINSCHLÄGIGE DOKUMENTE | | | Seite 2 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl.4) |
| A | US-A-4 272 796 (R. VAN KREUNINGEN) <br> * Figuren; Spalte 4, Zeilen 9-17 * | | 1,4-6 9 | |

----

| | | RECHERCHIERTE SACHGEBIETE (Int. Cl.4) |
|---|---|---|

Der vorliegende Recherchenbericht wurde für alle Patentansprüche erstellt.

| Recherchenort | Abschlußdatum der Recherche | Prüfer |
|---|---|---|
| DEN HAAG | 02-11-1987 | SPIGARELLI A. |